# EUROPEAN PATENT SPECIFICATION

(11) **EP 3 030 333 B1**
(45) Date of publication and mention of the grant of the patent: **30.09.2020**
(21) Application number: 14753108.1
(22) Date of filing: 01.08.2014
(51) Int. Cl.: B01D 25/164

(54) **A FILTER PRESS**
FILTERPRESSE
FILTRE-PRESSE

(30) Priority: 05.08.2013 FI 20135810
(43) Date of publication of application: 15.06.2016
(73) Proprietor: Outotec (Finland) Oy, 02230 Espoo (FI)
(72) Inventor: SUUTARI, Teppo, FI-54770 Heituinlahti (FI); ERONEN, Saku, FI-83500 Outokumpu (FI)
(74) Representative: Kolster Oy Ab
(86) International application number: PCT/FI2014/050604
(87) International publication number: WO 2015/018975

(56) References cited:
- CA-A1- 2 235 404
- CN-U- 202 485 767
- CN-U- 202 928 677

## Description

### Field of the invention

The present invention relates to a filter press, and more particularly to a filter press as defined in the preamble of claim 1.

### Background of the invention

The present invention relates in particular a filter press comprising filter plates arranged in a stack of filter plates which the filter plates lie vertically, but can be applied to other types of filter equipment, such as those in which filter plates are disposed horizontally and are vertically movable. In other words the invention relates in particular to vertical plate filter press arrangement, but is not limited thereto.

Typically plate filter presses are used in process industry for separating liquid and solid fractions of slurry from each other. There are different types of filter presses depending for example on the plate position, filtration principle and degree of automation. Typical filter press comprises a stack filter plates in which a set of vertical juxtaposed plates are pressed against each other by a pressing device at one end of the stack. The pressing is applied in a horizontal direction. The vertical plates and filter cloth adhere to each other and form watertight filtration chambers. Slurry is pumped to the filtration chambers with high pressure and solid part of the slurry is retained in the filtration chambers to form filter cakes. The liquid part of the slurry passes through the filter cloth and comes out the filter press while the filter cake is formed in the filtration chambers on the filter cloth. When a required amount of solid from the slurry has accumulated in the chambers, pumping of the slurry is stopped. A next step is usually to apply membrane pressure, in which pressure medium is conducted to a space between flexible membranes and the bodies of filter plates to compress the membranes such that they swell and remove liquid from the filter cake. The membrane pressure is usually then stopped and compressed air is passed through the filter cakes to reduce the moisture content of the filter cakes. After filtration the stack of filter plates are opened by the pressing device and the filter plates are spaced apart such that the filter plates are placed in a certain distance from each other. By opening the stack of filter plates the filter cakes fall outside the filter press and the stack of filter plates can be closed again for a next filtration cycle. After the opening of the stack of filter plates it is also possible to shake the filter cloth and to clean the filter cloth and the stack of filter plates.

In typical plate filter press the duration of the filtration cycle and used pressures are freely adjustable and generally carried out automatically. If all filtration parameters, for example slurry density, particle size distribution and permeability of the filter cloth, stay constant different filtration cycle parts can be optimized to achieve the desired final filtration outcome. Normally the goal is particular moisture content of the filter cake.

In practice the slurry density varies which leads to either a thicker filter cake or a thinner filter cake when the pumping period stays constant. In addition if time spent on applying membrane pressure and passing compressed air through the filter cakes do not change but stay constant it leads to a filtration result which is something else than an optimum result, i.e. an optimum filter cake. A thinner filter cake is normally drier than it should be and in addition the filtration capacity does not reach the level that it should. A thicker filter cake on the other hand comprises too much moisture and it may lead to problems when handling the filter cakes during the removal of them from the filter press or in aftertreatment. In both cases the filter cake is something else than an optimum filter cake.

Document CA 2235404 discloses a filter press with weight responsive bumping of filter plates. Document CN202485767U discloses a filter press weighing system. Document CN202928677U discloses a filter press material electronic metering system.

In prior art the above mentioned problems are solved by methods that make possible using constant pumping volume in spite of variations in the slurry density. For example by determining the slurry density one can calculate how much slurry needs to be pumped in order to form an optimum size filter cake and then adjust pumping time based on those calculations. These methods however require sensitive instrumentation that senses failures or defects but they do not take into account other filtration parameters of the slurry such as solid matter shape or size distribution.

Another prior art method is to monitor continuously the total mass of the filter press with weighing sensors that are arranged such that the filter press is on them. When pumping slurry to the filter press the total mass of the filter press increases while the solid content accumulates to the filtration chambers. When the total mass of the filter press reaches a certain value the pumping phase can be stopped so that every time the pumping phase stops there is always same amount of solid content in the filter press despite of changes in the slurry density. When thickness of the filter cakes has been stabilized and the fact that the following periods for membrane compression and for air drying are constant lead always to similar moisture content of the filter cakes provided that other slurry properties than the density remain constant.

Problem with the prior art method is that monitoring continuously the total mass of the filter press never leads to high preciseness because the mass of the filter press alone is typically very large compared to the mass of the filter cake. Especially when optimizing the membrane compression and air drying phases the part of the mass that changes is so little that in practice these phases cannot be optimized only by monitoring the total mass of the filter press.

Another problem with the prior art is that if the filter press lies on top of multiple weighing sensors the filter press cannot be attached to the ground fast because then the weighing sensors no longer can measure the changes in the filter press mass during filtration. This kind of flexible construction is also very sensitive to failures because for example vibrations of the filter press and the ground cause extra strain to the weighing sensors. In addition maintenance of the weighing sensors under the filter press and protection against slurry splashes is difficult.

As mentioned above monitoring the mass of the filter cakes in the filtration chambers by weighing the whole filter press is quite tricky as mentioned above. Pressure inside the filter press may be typically 10 bar during filtration and because of the large area of the filter plates the frame of the filter press has to be robust and that leads to great weight of the filter press.

### Brief description of the invention

An object of the present invention is thus to provide a filter press, a body and an arrangement so as to alleviate the above disadvantages. The objects of the invention are achieved by a filter press which is characterized by what is stated in the independent claim 1. The preferred embodiments of the invention are disclosed in the dependent claims.

An object of the invention is that the filter cake formation in filtration chambers of the filter press is more easily monitored and gives more accurate results about the formation.

The invention is based on the idea of monitoring the formation of filter cakes in a stack of filter plates by weighing the stack of filter plates instead of the whole filter press including devices for shaking or washing the filter cloth or the stack of filter plates. The sensors are interposed between the stack of filter plates and the body of the filter press. In other words only thing weighed is the stack of filter plates which comprises multiple filtering plates with necessary attachments. That way the mass of the solid matter in the stack of filter plates in relation to the mass of the entire mass of the stack of filter plates is a lot greater than when weighing the entire mass of the filter press. The filter press according to the invention comprises a body and a stack of filter plates and a weighing device disposed between the body and the stack of filter plates for supporting and carrying the weight of said stack of filter plates. The body according to the invention for supporting a stack of filter plates comprising plurality of filtering plates comprises a weighing device for weighing the stack of filter plates. The arrangement in a filter press according to the invention in which said filter press comprises a stack of filter plates comprising plurality of filtering plates arranged side by side in the stack of filter plates and a body for supporting said stack of filter plates such that the stack of filter plates and the body are in connection to each other through a weighing device for weighing the stack of filter plates.

An advantage of the arrangement of the invention is that the weighing is more precise because the arrangement eliminates horizontal forces which would be directed toward the weighing sensors as happens in the prior art weighing method.

Another advantage of the invention is that the filter press can be firmly attached to the ground and the maintenance of the weighing sensors as well as protection against slurry splashes is easy because of the position above the ground level.

The filter press according to the invention is also less expensive compare to the prior art way of weighing because requirement for the weighing sensors are less due to the smaller load directed to the sensors.

### Brief description of the drawings

In the following the invention will be described in greater detail by means of preferred embodiments with reference to the attached drawings, in which
Figure 1 shows a filter press;
Figure 2 shows the filter press shown in figure 1 in an unassembled state;
Figure 3 shows one embodiment of the invention;
Figure 4 shows second embodiment of the invention; and
Figure 5 shows third embodiment of the invention.

### Detailed description of the invention

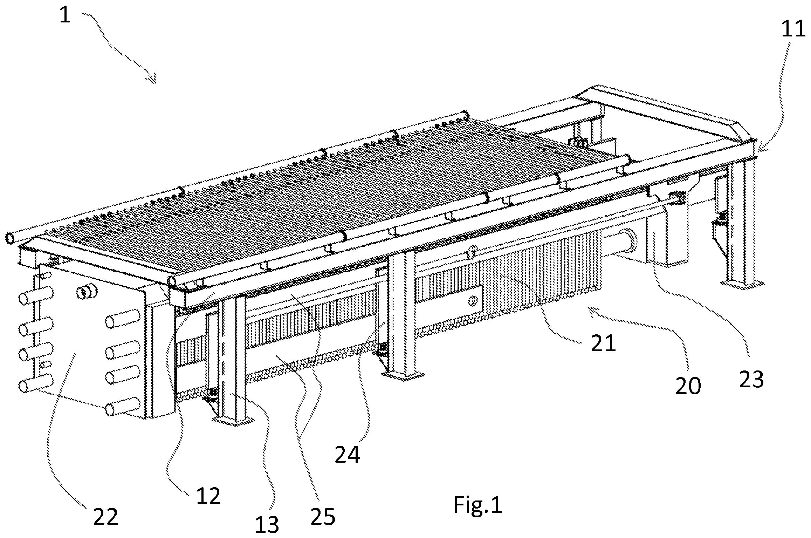

Figure 1 shows a filter press 1 according to the invention which comprises a body 11 and a stack of filter plates 20 comprising multiple filtering plates 21. The filtering plates 21 are arranged side by side such that each filtering plate is in vertical direction, i.e. the stack of filter plates 20 is in a horizontal direction. The filtering plates 21 and a filter cloth (not shown in the figure) form together filtration chambers in which the filter cakes are formed during filtration. The body 11 comprises a frame structure 12 and pillars 13 attached to said frame structure 12, said body 11 carries the stack of filter plates 20. The stack of filter plates 20 has two end plates 22, 23 on both ends of the stack of filter plates 20. One of the end plates 22 is unmovable and the other end plate 23 is movable so that during the filtration the filtering plates 21 are firmly closed to each other by means of the action of the movable end plate 23. After filtration the movable end plate 23 is moved away from the filtering plates 21 so that the stack of filter plates 20 opens and the filter cakes that are formed during filtration can be taken away.

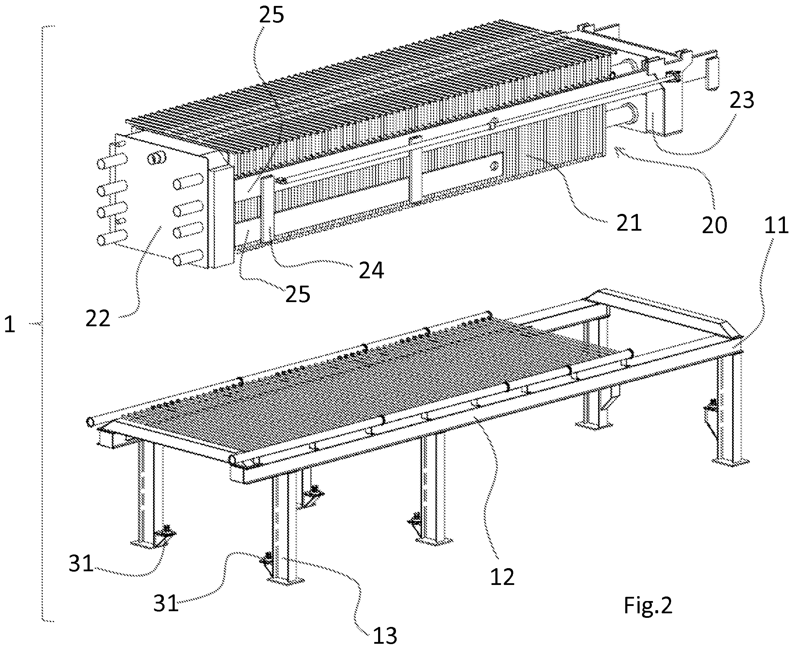

Figure 2 shows the filter press 1 shown in figure 1 in an unassembled state such that the stack of filter plates 20 and the body 11 are unconnected. The stack of filter plates 20 comprises multiple filtering plates 21 and two end plates 22, 23 on the ends of the stack of filter plates 20. The stack of filter plates 20 further comprises side members 25 for arranging the stack of filter plates 20 in connection with the body 11. During filtration filter cakes are formed in the filtration chambers which are composed of the filtering plates 21 together with the filter cloth that are alternating in the stack of filter plates 20. The body 11 comprises a supporting structure which is preferably a pillar structure comprising a frame structure 12 and pillars 13. The frame structure 12 has preferably two longitudinal rails on top of the pillars 13. A weighing device 30 is disposed between the body 11 and the stack of filter plates 20 for supporting and carrying the weight of said stack of filter plates 20. The weighing device 30 comprises at least one weighing sensor 31 for weighing filter cake formation in the stack of filter plates 20. The stack of filter plates 20 is to be supported by the body 11 such that the contact point between the stack of filter plates 20 and the body 11 comprises weighing sensors 31 for weighing the stack of filter plates 20. In more detail the weighing sensor 31 is arranged in a contact point between a vertical member 24 of the stack of filter plates 20 and a pillar 13 of the body 11. In figure 2 the weighing sensors 31 are arranged on the inner surface of the pillars 13. When the stack of filter plates 20 is positioned to its place in the body 11 the stack of filter plates 20 rests on the weighing sensors 31 and during filtration the weight of the stack of filter plates 20 grows while the filter cakes are formed in the filtration chambers and this can be monitored with the help of the weighing sensors 31. The at least one weighing sensor 31 is attached to the pillar 13 of the body 11.

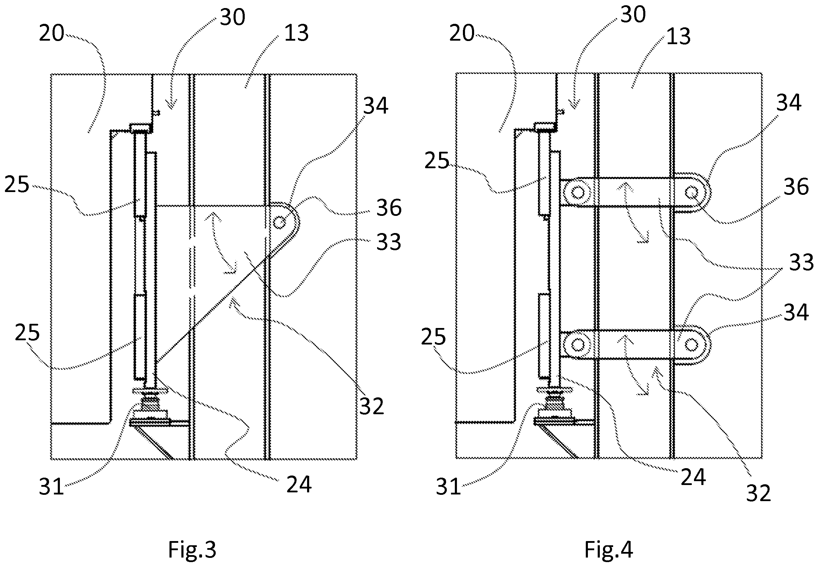

So the body 11 comprises a weighing device 30 for weighing the stack of filter plates 20. Figures 3 - 5 show the weighing device 30 which comprises at least one weighing sensor 31 for weighing the filter cake formation in the stack of filter plates 20 and further comprises an attachment structure 32 for attaching the stack of filter plates 20 and the body 11 together such that vertical movement of the stack of filter plates 20 relative to the body 11 is allowed.

Figure 3 shows one embodiment of the invention in which the stack of filter plates 20 is in connection with the body 11 through the weighing sensor 31 together with an attachment structure 32 which comprises a supporting plate 33 in this embodiment. The supporting plate 33 is attached to a vertical member 24 of the stack of filter plates 20 which the vertical member 24 connects together side members 25 of the stack of filter plates 20. The attachment structure 32 further comprises a counterpart 34 for the supporting plate 33 which the counterpart 34 is arranged in the pillar 13 of the body 11. The supporting plate 33 and the counterpart 34 are connected together through a hinge pin 36. The hinge goes through an aperture both in the supporting plate 33 and in the counterpart 34. The hinge prevents the stack of filter plates 20 from moving in a horizontal direction while the movement in vertical direction is possible. Before the filtration starts the weighing sensor 31 gives a starting value with an empty stack of filter plates 20, i.e. without filter cakes, and during the filtration while the weight of the stack of filter plates 20 grows and the filter cakes form in the filtration chambers the vertical member 24 pushes down toward the weighing sensor 31 so that the filter cake formation can be monitored.

Figure 4 shows second embodiment of the invention in which the stack of filter plates 20 is in connection with the body 11 through the weighing sensor 31 together with two supporting plates 33. The supporting plates 33 are attached to a vertical member 24 which connects together side members 25 of the stack of filter plates 20 in a similar way as in figure 1. The attachment structure 32 comprises in this embodiment two supporting plates 33 that are in connection with the body 11 through hinge pins 36. The attachment structure 32 further comprises a counterpart 34 for each of the supporting plates 33 for the hinge pin 36 to be arranged to go through an aperture in the support plate 33 and in the counterpart 34. The hinge allows movement of the stack of filter plates 20 in a vertical direction so that the weighing sensor 31 detects the changes in the weight of the stack of filter plates 20 but it prevents movements in horizontal direction so that horizontal forces can be eliminated.

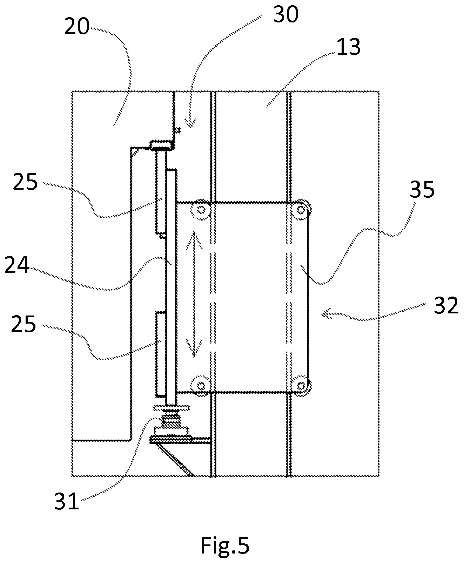

Figure 5 shows third embodiment of the invention in which the body 11 and the stack of filter plates 20 are in connection together through the weighing sensor 31 and a guiding bar 35. The guiding bar 35 is connected to the stack of filter plates 20 through a vertical member 24 which connects together side members 25 of the stack of filter plates 20. The guiding bar 35 is in connection with the pillar 13 of the body 11 such that vertical movement of the guiding bar 35 relative to the pillar 13 is allowed but horizontal movement is prevented. The guiding bar 35 slides along the pillar 13 with the help of slides or similar structure that enables movement along the pillar 13.

In figures 3 and 4 the attachment structure 32 comprises a supporting plate 33 in connection to the stack of filter plates 20 and a counterpart 34 in connection to the body 11 such that said supporting plate 33 and said counterpart 34 form a connection together. The attachment structure 32 further comprises a hinge pin 36 and the supporting plate 33 and the counterpart 34 comprise an aperture such that the hinge pin 36 connects the supporting plate 33 and the counterpart 34 together through the aperture. So the pillar 13 of the body 11 comprises a counterpart 34 for a supporting plate 33 to be connected to the pillar 13 via an aperture in the counterpart 34 and in the supporting plate such that a hinge pin 36 can be inserted through the apertures to connect the stack of filter plates 20 to the body 11. In figure 5 the attachment structure 32 comprises a guiding bar 35 in connection to the stack of filter plates 20 and arranged to slide along the pillar 13 of the body 11.

Although the figures show a filter press 1 arranged such that the stack of filter plates 20 is arranged in a horizontal direction the invention is not limited only such horizontal filter presses 1 but is also applicable to filter presses 1 that are arranged in vertical direction.

It will be obvious to a person skilled in the art that, as the technology advances, the inventive concept can be implemented in various ways. The invention and its embodiments are not limited to the examples described above but may vary within the scope of the claims.

## Claims

1. A filter press (1) comprising: a stack of filter plates (20), a body (11) carrying said stack of filter plates,
**characterized by** the filter press
further comprising
a weighing device (30) disposed between the body and the stack of filter plates (20) for supporting and carrying the weight of said stack of filter plates (20),
wherein the weighing device (30) comprises at least one weighing sensor (31) for weighing filter cake formation in the stack of filter plates (20) and an attachment structure (32) attaching the stack of filter plates (20) and the body (11) together such that vertical movement of the stack of filter plates (20) relative to the body (11) is allowed.

2. A filter press (1) according to claim 1, **characterized in that** the weighing sensor (31) is arranged in a contact point between a vertical member (24) of the stack of filter plates (20) and a pillar (13) of the body (11).

3. A filter press (1) according to claim 1 or 2, **characterized in that** the body (11) comprises a frame structure (12) and pillars (13) attached to said frame structure (12) and said at least one weighing sensor (31) is attached to the pillar (13).

4. A filter press (1) according to any one of claims 1-3, **characterized in that** the attachment structure (32) comprises a supporting plate (33) in connection to the stack of filter plates (20) and a counterpart (34) in connection to the body (11) such that said supporting plate (33) and said counterpart (34) form a connection together.

5. A filter press (1) according to claim 4, **characterized in that** the attachment structure (32) further comprises a hinge pin (36) and the supporting plate (33) and the counterpart (34) comprise an aperture such that the hinge pin (36) connects the supporting plate (33) and the counterpart (34) together through the aperture.

6. A filter press (1) according to any one of claims 1-3, **characterized in that** the attachment structure (32) comprises a guiding bar (35) in connection to the stack of filter plates (20) and arranged to slide along the pillar (13) of the body (11).

7. A filter press (1) according to any of the preceding claims, **characterized in that** the stack of filter plates (20) is arranged in a horizontal direction in the filter press (1).

8. A filter press (1) according to claim 1, **characterized in that** the stack of filter plates (20) comprises plurality of filtering plates (21) arranged side by side in the stack of filter plates (20),
the body (11) supports said stack of filter plates (20) and comprises a frame structure (12) and pillars (13) attached to said frame structure (12),
wherein the stack of filter plates (20) and the body (11) are in connection to each other through the weighing device (30) for weighing the stack of filter plates (20), and wherein the weighing sensor (31) is arranged in a contact point between a vertical member (24) of the stack of filter plates (20) and a pillar (13) of the body (11).

## Patentansprüche

1. Filterpresse (1), die Folgendes umfasst:
einen Stapel Filterplatten (20),
ein Gehäuse (11), das den Stapel Filterplatten trägt,
**dadurch gekennzeichnet, dass** die Filterpresse ferner Folgendes umfasst
eine Wägevorrichtung (30), die zum Stützen und Tragen des Gewichts des Stapels Filterplatten (20) zwischen dem Gehäuse und dem Stapel Filterplatten (20) angeordnet ist,
wobei die Wägevorrichtung (30) mindestens einen Wägesensor (31) zum Wiegen einer Filterkuchenbildung im Stapel Filterplatten (20) und eine Befestigungsstruktur (32) zum Befestigen des Stapels Filterplatten (20) am Gehäuse (11), derart, dass eine vertikale Bewegung des Stapels Filterplatten (20) relativ zum Gehäuse (11) erlaubt ist, umfasst.

2. Filterpresse (1) nach Anspruch 1, **dadurch gekennzeichnet, dass** der Wägesensor (31) an einem Kontaktpunkt zwischen einem vertikalen Element (24) des Stapels Filterplatten (20) und einem Pfosten (13) des Gehäuses (11) platziert ist.

3. Filterpresse (1) nach Anspruch 1 oder 2, **dadurch gekennzeichnet, dass** das Gehäuse (11) eine Rahmenstruktur (12) und Pfosten (13), die an der Rahmenstruktur (12) befestigt sind, umfasst und der mindestens eine Wägesensor (31) am Pfosten (13) befestigt ist.

4. Filterpresse (1) nach einem der Ansprüche 1-3, **dadurch gekennzeichnet, dass** die Befestigungsstruktur (32) eine Stützplatte (33) in Verbindung mit dem Stapel Filterplatten (20) und ein Gegenstück (34) in Verbindung mit dem Gehäuse (11) umfasst, derart, dass die Stützplatte (33) und das Gegenstück (34) zusammen eine Verbindung bilden.

5. Filterpresse (1) nach Anspruch 4, **dadurch gekennzeichnet, dass** die Befestigungsstruktur (32) ferner einen Scharnierstift (36) umfasst und die Stützplatte (33) und das Gegenstück (34) eine Öffnung umfassen, derart, dass der Scharnierstift (36) die Stützplatte (33) und das Gegenstück (34) durch die Öffnung miteinander verbindet.

6. Filterpresse (1) nach einem der Ansprüche 1-3, **dadurch gekennzeichnet, dass** die Befestigungsstruktur (32) einen Führungsstab (35) umfasst, der mit dem Stapel Filterplatten (20) verbunden und platziert ist, um entlang des Pfostens (13) des Gehäuses (11) zu gleiten.

7. Filterpresse (1) nach einem der vorhergehenden Ansprüche, **dadurch gekennzeichnet, dass** der Stapel Filterplatten (20) in einer horizontalen Richtung der Filterpresse (1) platziert ist.

8. Filterpresse (1) nach Anspruch 1, **dadurch gekennzeichnet, dass** der Stapel Filterplatten (20) eine Vielzahl von Filterplatten (21) umfasst, die Seite an Seite im Stapel Filterplatten (20) platziert sind,
das Gehäuse (11) stützt den Stapel Filterplatten (20) und umfasst eine Rahmenstruktur (12) und Pfosten (13), die an der Rahmenstruktur (12) befestigt sind,
wobei der Stapel Filterplatten (20) und das Gehäuse (11) zum Wiegen des Stapels Filterplatten (20) über die Wägevorrichtung (30) miteinander verbunden sind und wobei der Wägesensor (31) an einem Kontaktpunkt zwischen einem vertikalen Element (24) des Stapels Filterplatten (20) und einem Pfosten (13) des Gehäuses (11) platziert ist.

## Revendications

1. Filtre-presse (1) comprenant :
un empilement de plaques de filtre (20), un corps (11) portant ledit empilement de plaques de filtre,
**caractérisé en ce que** le filtre-presse comprend en outre :
un dispositif de pesage (30) disposé entre le corps et l'empilement de plaques de filtre (20) pour supporter et porter le poids dudit empilement de plaques de filtre (20),
dans lequel le dispositif de pesage (30) comprend au moins un capteur de poids (31) pour peser la formation de gâteau de filtration dans l'empilement de plaques de filtre (20) et une structure de fixation (32) fixant l'empilement de plaques de filtre (20) et le corps (11) ensemble de sorte que le mouvement vertical de l'empilement de plaques de filtre (20) par rapport au corps (11) est autorisé.

2. Filtre-presse (1) selon la revendication 1, **caractérisé en ce que** le capteur de poids (31) est agencé dans un point de contact entre un élément vertical (24) de l'empilement de plaques de filtre (20) et un pilier (13) du corps (11).

3. Filtre-presse (1) selon la revendication 1 ou 2, **caractérisé en ce que** le corps (11) comprend une structure de bâti (12) et des piliers (13) fixés à ladite structure de bâti (12) et ledit au moins un capteur de poids (31) est fixé au pilier (13).

4. Filtre-presse (1) selon l'une quelconque des revendications 1 à 3, **caractérisé en ce que** la structure de fixation (32) comprend une plaque de support (33) en raccordement avec l'empilement de plaques de filtre (20) et une contrepartie (34) en raccordement avec le corps (11) de sorte que ladite plaque de support (33) et ladite contrepartie (34) forment un raccordement ensemble.

5. Filtre-presse (1) selon la revendication 4, **caractérisé en ce que** la structure de fixation (32) comprend en outre une broche de charnière (36) et la plaque de support (33) et la contrepartie (34) comprennent une ouverture de sorte que la broche de charnière (36) raccorde la plaque de support (33) et la contrepartie (34) ensemble par le biais de l'ouverture.

6. Filtre-presse (1) selon l'une quelconque des revendications 1 à 3, **caractérisé en ce que** la structure de fixation (32) comprend une barre de guidage (35) en raccordement avec l'empilement de plaques de filtre (20) et agencée pour coulisser le long du pilier (13) du corps (11).

7. Filtre-presse (1) selon l'une quelconque des revendications précédentes, **caractérisé en ce que** l'empilement de plaques de filtre (20) est agencé dans une direction horizontale dans le filtre-presse (1).

8. Filtre-presse (1) selon la revendication 1, **caractérisé en ce que** l'empilement de plaques de filtre (20) comprend une pluralité de plaques filtrantes (21) agencées côte à côte dans l'empilement de plaques de filtre (20),
le corps (11) supporte ledit empilement de plaques de filtre (20) et comprend une structure de bâti (12) et des piliers (13) fixés à ladite structure de bâti (12),
dans lequel l'empilement de plaques de filtre (20) et le corps (11) sont en raccordement entre eux par le biais du dispositif de pesage (30) pour peser l'empilement de plaques de filtre (20), et dans lequel le capteur de poids (31) est agencé dans un point de contact entre l'élément vertical (24) de l'empilement de plaques de filtre (20) et un pilier (13) du corps (11).
